## Europäisches Patentamt

## European Patent Office

## Office européen des brevets

(19)

(11) Veröffentlichungsnummer: **0 165 403**
**B1**

(12) **EUROPÄISCHE PATENTSCHRIFT**

(45) Veröffentlichungstag der Patentschrift:
**16.08.89**

(51) Int. Cl.⁴: **G 01 S 17/10**

(21) Anmeldenummer: **85104782.9**

(22) Anmeldetag: **29.01.82**

(60) Veröffentlichungsnummer der früheren Anmeldung
nach Art. 76 EPÜ: **0057447**

(54) **Verfahren zur Steuerung der Dynamik eines Entfernungsmessgerätes nach dem Prinzip der Lichtimpuls-Laufzeitmessung und Vorrichtung zur Durchführung dieses Verfahrens.**

(30) Priorität: **03.02.81 DE 3103567**

(43) Veröffentlichungstag der Anmeldung:
**27.12.85 Patentblatt 85/52**

(45) Bekanntmachung des Hinweises auf die Patenterteilung:
**16.08.89 Patentblatt 89/33**

(84) Benannte Vertragsstaaten:
**CH FR GB LI NL SE**

(56) Entgegenhaltungen:
**DE-A- 2 634 627**
**DE-A- 2 723 835**
**DE-B- 2 257 445**
**US-A- 3 779 645**

(73) Patentinhaber: **MITEC Mikroelektronik Mikrotechnik Informatik GmbH, Prof.-Messerschmitt-Strasse 3, D-8014 Neubiberg (DE)**

(72) Erfinder: **Chaborski, Holko, Dipl.-Ing., Englschalkinger Strasse 239E, D-8000 München 81 (DE)**
Erfinder: **Mehnert, Walter, Dr. Dipl.-Ing., Grillpartzerstrasse 6, D-8012 Ottobrunn (DE)**

(74) Vertreter: **Strasser, Wolfgang, Dipl.-Phys et al, Patentanwälte Strohschänk, Uri & Strasser Innere Wiener Strasse 8, D-8000 München 80 (DE)**

## Beschreibung

Die Erfindung betrifft ein Verfahren und eine Vorrichtung zur Steuerung der Dynamik eines Entfernungsmessgerätes nach dem Prinzip der Lichtimpuls-Laufzeitmessung mit den im Oberbegriff von Anspruch 1 bzw. Anspruch 2 genannten Merkmalen.

Bei Entfernungsmessgeräten, die nach dem Prinzip der Laufzeitmessung von einzelnen Lichtimpulsen arbeiten, besteht grundsätzlich das Problem, eine zumindest kurzfristig exakt reproduzierbare zeitliche Korrelation zwischen dem Zeitpunkt, in dem ein Lichtimpuls am elektro-optischen Empfänger des Empfangskanals eintrifft und dem Zeitpunkt zu gewährleisten, in dem der Empfangskanal in Reaktion hierauf ein zeitsignifikantes Signal abgibt, durch das die entsprechende Lichtimpulse-Laufzeitmessung gestartet oder beendet wird.

Zur Erzielung dieser exakten zeitlichen Korrelation ist es aus der DE-A 26 34 627 bekannt, dem elektro-optischen Empfänger ein Resonanzsystem beispielsweise in Form eines Resonanz-Schwingkreises nachzuschalten, das durch das elektrische Signal, das der elektro-optische Empfänger beim Eintreffen eines Lichtimpulses erzeugt, zu einem eine Reihe von Perioden andauernden, in seiner Amplitude gedämpften Schwingungsvorgang angestossen wird. Es hat sich gezeigt, dass zumindest kurzfristig die Nulldurchgänge des hierbei vom Resonanzsystem erzeugten Schwingungssignals die erforderliche exakte zeitliche Korrelation zum Empfangszeitpunkt des Lichtimpulses aufweisen und sich daher sehr gut für die Erzeugung eines zeitsignifikanten Signals eignen. Zu diesem Zweck ist es erforderlich, das vom Resonanzsystem abgegebene Schwingungssignal mit Hilfe eines Verstärkers zu verstärken und anhand des Verstärkers-Ausgangssignals durch Komparatoren das ordnungsgemässe Anschwingen des Resonanzsystems festzustellen und einen geeigneten Nulldurchgang des Verstärker-Ausgangssignals zu detektieren und zur Auslösung eines zeitsignifikanten Signals zu verwenden.

Wird nun bei einem sehr nahe am Messgerät befindlichen und/oder sehr stark reflektierenden Zielgegenstand das Resonanzsystem von einem sehr hellen Lichtimpuls zu einer so starken Schwingung angestossen, dass der ihm nachgeschaltete Verstärker übersteuert wird, so kann es zu erheblichen zeitlichen Verschiebungen der Nulldurchgänge des Verstärker-Ausgangssignal kommen. Damit ist aber die geforderte exakte zeitliche Korrelation zwischen diesen Nulldurchgängen und dem Empfangszeitpunkt des jeweiligen Lichtimpulses nicht mehr gegeben und eine genaue Laufzeitmessung unmöglich.

Zur Vermeidung dieses Problems werden in der DE-A 27 23 835 ein Verfahren der eingangs genannten Art und eine Vorrichtung zur Durchführung dieses Verfahrens beschrieben. Gemäss diesem Stand der Technik ist dem Resonanzsystem des Empfangskanals ein Verstärker mit einem steuerbaren Verstärkungsfaktor nachgeschaltet, dessen Ausgangssignal durch einen Komparator mit einer vorgegebenen Referenzspannung verglichen wird. Übersteigt die Amplitude des Verstärker-Ausgangssignals die Referenzspannung, so erzeugt der Komperator ein Signal, das einerseits dazu führt, dass die gerade laufende Messung abgebrochen bzw. der so gewonnene Messwert nicht verwendet und dass andererseits der Verstärkungsfaktor des dem Resonanzsystem nachgeschalteten Verstärkers verringert wird. Mit diesem verringerten Verstärkungsfaktor wird dann der Messversuch dadurch wiederholt, dass ein neuer Lichtimpuls ausgesandt wird. Dieses Verfahren wird solange wiederholt, bis die Amplitude des Verstärker-Ausgangssignals die Referenzspannung nicht mehr übersteigt und somit eine genaue Laufzeitmessung gewährleistet ist.

Auch der US-A 3 900 261 ist ein Entfernungsmessgerät nach dem Prinzip der Lichtimpuls-Laufzeitmessung entnehmbar, bei dem die Verstärkung eines dem elektro-optischen Empfänger nachgeschalteten Verstärkers automatisch geregelt wird, um eine Übersteuerung zu vermeiden. Die Verwendung eines Resonanzsystems und ein Vergleich der Amplitude eines vom Verstärker abgegebenen Schwingungssignals mit einer Referenzspannung zur Erkennung der Übersteuerung wird dort jedoch nicht beschrieben.

Die bekannte Änderung des Verstärkungsfaktors eines Verstärkers im Empfangskanal eines Entfernungsmessgerätes zur Steuerung der Dynamik, d.h. zur Anpassung an verschieden weit entfernte und/oder verschieden stark reflektierende Zielgegenstände hat jedoch den Nachteil, dass mit ihr nur ein sehr kleiner Dynamikbereich überstrichen werden kann, der maximal in der Grössenordnung von 1:100 liegt. Überdies besteht die Gefahr einer mit grösser werdendem Verstärkungsfaktor zunehmenden Schwingneigung des Verstärkers, die die zeitliche Korrelation zwischen den Empfangszeitpunkten der einzelnen Lichtimpulse und dem jeweils zu detektierenden Nulldurchgang und somit die Messgenauigkeit erheblich verschlechtert.

Weiterhin hat ein kleiner Dynamikbereich zur Folge, dass der Entfernungsmessbereich eines solchen Messgerätes sehr eingeschränkt ist, weil die Helligkeit der Messlichtimpulse so klein gewählt werden muss, dass auch bei sehr nahe am Messgerät befindlichen und stark reflektierenden Zielgegenständen der Verstärker im Empfangskanal nicht übersteuert wird. Damit ist aber die maximale Reichweite eines solchen Entfernungsmessgerätes sehr gering.

Demgegenüber liegt der Erfindung die Aufgabe zugrunde ein Verfahren und eine Vorrichtung der eingangs genannten Art zu schaffen, die es ermöglichen, bei Abdeckung eines sehr grossen Dynamikbereiches zur Messung der Entfernung sowohl von beliebig nahen als auch von sehr weit entfernten Zielgegenständen für alle diese Messungen eine extrem hohe Messgenauigkeit zu erzielen.

Zur Lösung dieser Aufgabe sieht die Erfindung die im Anspruch 1 niedergelegten Merkmale vor. Eine zur Durchführung eines erfindungsgemässen Verfahrens geeignete Vorrichtung ist im Anspruch 2 niedergelegt.

Durch die erfindungsgemässen Massnahmen kann der Verstärker auf einen Verstärkungsfaktor eingestellt werden, bei dem keinerlei Schwingneigung besteht. Solange der Verstärker also nicht übersteuert wird, stellt das Verstärker-Ausgangssignal eine exakte Reproduktion des dem Verstärker zugeführten Schwingungssignals dar, und seine Nulldurchgänge besitzen eine in der erforderlichen Weise reproduzierbare genaue zeitliche Korrelation zum Empfangszeitpunkt des jeweiligen Lichtimpulses; daher ist dieses Verstärker-Ausgangssignal auch bei sehr hohen Anforderungen an die Messgenauigkeit zur Erzeugung eines zeitsignifikanten Signals ohne weiteres geeignet.

Um trotz des konstanten Verstärkungsfaktors auch bei sehr nahen und/oder sehr stark reflektierenden Zielgegenständen ein Übersteuern des Verstärkers zu verhindern, werden erfindungsgemäss Geräteparameter verändert, die die Amplitude des dem Verstärker zugeführten Schwingungssignals beeinflussen. Hierzu gehören insbesondere die Empfindlichkeit des elektro-optischen Empfängers, die durch Änderung seiner Vorspannung beeinflussbar ist, und die Helligkeit des am elektro-optischen Empfänger eintreffenden Lichtimpulse, die ihrerseits durch Steuerung der Senderleistung und/oder durch Veränderung des Dämpfungsfaktors eines im Messlichtweg angeordneten steuerbaren Dämpfungsgliedes verändert werden kann.

Es stehen somit mehrere Geräteparameter zur Verfügung, die voneinander unabhängig verändert und somit entweder gleichsinnig oder gegensinnig zur Beeinflussung der Amplitude des dem Verstärker zugeführten Schwingungssignals eingesetzt werden können. Damit lässt sich ein ausserordentlich grosser Dynamikbereich von beispielsweise $1 : 3 \times 10^9$ erreichen, so dass mit einem derart ausgestatteten Messgerät ein sehr grosser Entfernungsbereich mit hoher Genauigkeit ausgemessen werden kann.

Bei dem erfindungsgemässen Verfahren findet ein schrittweises Herantasten an den richtigen Dämpfungswert statt. Es wird zunächst ein erster Messversuch unternommen, bei dem alle die Amplitude des dem Verstärker zugeführten Schwingungssignals beeinflussenden Geräteparameter auf solche Werte geschaltet werden, dass diese Amplitude bei gegebener Entfernung und gegebenem Reflexionsvermögen des Zielgegenstandes möglichst gross wird.

Mit diesen Parameterwerten, d.h. also mit maximaler Senderleistung, minimaler Dämpfung im Messlichtweg und maximaler Vorspannung des elektro-optischen Empfängers wird ein erster Messversuch unternommen, bei dem ein Messlichtimpuls ausgesandt und empfangen wird. Zeigt der Vergleich des Verstärker-Ausgangssignals mit der Referenzspannung an, dass der Verstärker im linearen Bereich arbeitet, so wird das Messergebnis vom Messgerät erfasst und ausgewertet.

Ist der Verstärker jedoch übersteuert, so wird der erste Messversuch verworfen und zur Durchführung eines zweiten Messversuches wenigstens einer der zur Verfügung stehenden Geräteparameter auf einen anderen Wert umgeschaltet, der zu einer Dämpfung, d.h. zu einer Verringerung der Amplitude des dem Verstärker zugeführten Schwingungssignals führt. Da beim ersten, wegen der Übersteuerung des Verstärkers fehlgeschlagenen Messversuch nur die Tatsache nicht aber das Ausmass der Übersteuerung festgestellt wird, ist nicht bekannt, welcher Dämpfungsfaktor gewählt werden muss, um in den Linearitätsbereich des Verstärkers zu kommen.

Daher wird zunächst ein Grunddämpfungswert eingeschaltet, der erfindungsgemäss so gewählt ist, dass er etwas kleiner als der Dynamikbereich des Verstärkers, d.h. kleiner als das Verhältnis der kleinsten, durch den Verstärker gerade noch einwandfrei verarbeitbaren Signalamplitude zur oberen Grenze des Linearitätsbereiches des Verstärkers ist. Dadurch wird verhindert, dass ein Signal, durch das der Verstärker beim ersten Messversuch nur ganz gering übersteuert wurde, beim zweiten Messversuch so stark bedämpft wird, dass es wegen seiner nunmehr zu kleinen Amplitude nicht mehr ausgewertet werden kann.

Führt auch der zweite Messversuch zu einer Übersteuerung des Verstärkers, so sind weitere Messversuche mit erhöhten Dämpfungswerten erforderlich. Erfindungsgemäss sind die durch Umschalten der Geräteparameter auf andere Werte zur Verfügung stehenden erhöhten Dämpfungswerte so gestaffelt, dass sie möglichst nahe unterhalb fortlaufender ganzzahliger Potenzen des Grunddämpfungswertes liegen und diese mit Sicherheit nicht übersteigen. Setzt man also den Grunddämpfungswert gleich G, so kann dann, wenn auch beim zweiten Messversuch eine Übersteuerung des Verstärkers auftritt, ein dritter Versuch mit einem Dämpfungswert $G^2$ und, bei erneuter Übersteuerung, ein vierter Messversuch mit einem Dämpfungswert $G^3$ usw. unternommen werden, ohne dass die Gefahr besteht, dass das dem Verstärker zugeführte Schwingungssignal zu stark bedämpft wird.

Auf diese Weise wird erreicht, dass mit einer sehr geringen Zahl von Messversuchen der richtige Dämpfungswert automatisch eingestellt werden kann, ohne dass das Ausmass der Übersteuerung bei den einzelnen Messversuchen bekannt ist oder gemessen werden muss.

Die Erfindung wird im folgenden anhand eines Ausführungsbeispiels unter Bezugnahme auf die Zeichnung erläutert; in dieser zeigt:

Fig. 1 eine schematische Darstellung der wesentlichen Teile eines nach dem erfindungsgemässen Verfahren aufgebauten und arbeitenden Entfernungsmessgerätes, und

Fig. 2 ein Schaltbild eines bevorzugten, dem Resonanzsystem des Empfangskanals nachgeschalteten Verstärkers aus Fig. 1.

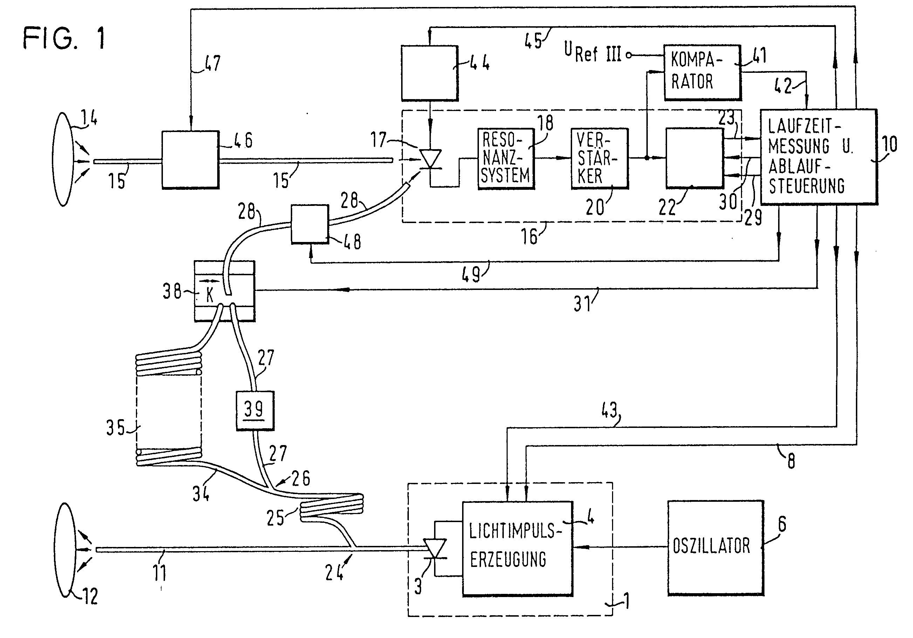

Wie in Fig. 1 dargestellt, besitzt ein nach dem erfindungsgemässen Verfahren arbeitendes Entfernungsmessgerät einen Sender 1, der beispielsweise eine Laser-Sendediode 3 und eine Schaltungsanordnung 4 umfasst, die zum Ansteuern der Sendediode 3 dient. Die Schaltungsanordnung 4 besteht im wesentlichen aus einem «langsam» aufladbaren Energiespeicher, beispielsweise in Form einer Kapazität, und einem steuerbaren elektronischen Schalter, der dazu dient, die im Energiespeicher angesammelte Energie schnell über die Sendediode 3 zu entladen, worauf die Sendediode 3 mit der Emission eines Laser-Lichtimpulses reagiert.

Die Ansteuerung dieses elektronischen Schalters kann für einen periodischen Betrieb mit Hilfe eines Oszillators 6 erfolgen, der mit vorgegebener Frequenz schwingt. Alternativ oder zusätzlich hierzu kann aber auch vorgesehen werden, dass der steuerbare elektronische Schalter zur Auslösung von Einzelimpulsen über eine Steuerleistung 8 von einer zentralen Ablaufsteuerung 10 getriggert wird.

Ein erster Teil eines jeden von der Sendediode 3 erzeugten Lichtimpulses wird als Messlichtimpuls verwendet, d.h. er wird über eine Lichtleitfaser 11 und eine Sendeoptik 12, die in Fig. 1 schematisch vereinfacht als einzelne Linse dargestellt ist, zum Zielgegenstand hin ausgesandt, dessen Entfernung gemessen werden soll.

Der zweite Teil eines jeden von der Sendediode 3 erzeugten Lichtimpulses wird als Referenzlichtimpuls verwendet, d.h. er wird durch eine Y-förmige Verzweigung 24 aus der Sende-Lichtleitfaser 11 ausgekoppelt und in einen Referenzlichtweg eingespeist, der zunächst eine Lichtleitfaser-Spule 25 und hinter dieser eine weitere Y-förmige Verzweigung 26 umfasst, hinter der der Referenzlichtweg in zwei funktional zueinander parallele Abschnitte 27 und 34 mit unterschiedlichen Längen aufgeteilt ist. Diese beiden Abschnitte vereinigen sich an einem optischen Umschalter 38 zu einem einzigen Lichtweg 28, der zu einer Photodiode 17 führt, die den elektro-optischen Empfänger des Empfangskanals 16 bildet.

An der weiteren Y-förmigen Verzweigung 26 wird jeder Referenzlichtimpuls wieder in zwei Teile aufgespalten, von denen sich der eine längs des kurzen Abschnittes 27 und der andere längs des langen Abschnittes 34 weiterbewegt. In Abhängigkeit von der Stellung des optischen Umschalters 38, der über eine Leitung 31 von der zentralen Ablaufsteuerung 10 betätigt wird, kann nur der eine oder der andere dieser beiden Teile eines jeden Referenzlichtimpulses über den Lichtweg 28 zur Photodiode 17 gelangen, während der jeweils andere Teil unterdrückt wird.

Bei einem Zielgegenstand, der einen hinreichend grossen Abstand aufweist, befindet sich der optische Umschalter 38 in einer Stellung, in der er den kurzen Abschnitt 27 des Referenzlichtweges mit dem Lichtweg 28 verbindet, so dass ein Referenzlichtimpuls, der an der Verzweigung 24 von einem von der Sendediode 3 erzeugten Lichtimpuls abgezweigt wurde, als erster an der Photodiode 17 anlangt. Derjenige Teil des zugehörigen Messlichtimpulses, der vom Zielgegenstand zum Messgerät reflektiert und mit Hilfe einer wieder vereinfacht als einzelne Linse dargestellten Empfangsoptik 14 in einen Lichtweg 15 eingespeist wird, der ebenfalls zur Photodiode 17 führt, kommt in diesem Fall nach dem Referenzlichtimpuls an der Photodiode 17 an.

Jedes der beiden elektrischen Signale, die von der Photodiode 17 in Antwort auf Empfang dieser beiden Lichtimpulse erzeugt werden, dient zum Anstossen eines Schwingungsvorganges in einem der Photodiode 17 nachgeschalteten Resonanzsystem 18, das beispielsweise gemäss der DE-A 26 34 627 als Parallel-Resonanzschwingkreis ausgebildet sein kann. Alternativ hierzu kann dieses Resonanzsystem 18 aber auch von einem Serien-Resonanzschwingkreis oder einem anderen elektromagnetischen Schwingungssystem gebildet sein.

Entscheidend ist, dass das Resonanzsystem 18 durch das von der Photodiode 17 beim Empfang eines jeden Lichtimpulses abgegebene Signal zu einem gedämpften Schwingungsvorgang angeregt wird, der im allgemeinen sinusförmig ist und mit exponentiell abnehmender Amplitude der einzelnen Halbschwingungen verläuft. Wenn der Abstand des Zielgegenstandes gross ist, dann ist auch der Zeitabstand zwischen den beiden Lichtimpulsen gross und der erste Schwingungsvorgang, der durch den Empfang des Referenzlichtimpulses ausgelöst wird, ist vollständig abgeklungen, wenn der Messlichtimpuls an der Photodiode 17 eintrifft und den zweiten Schwingungsvorgang auslöst.

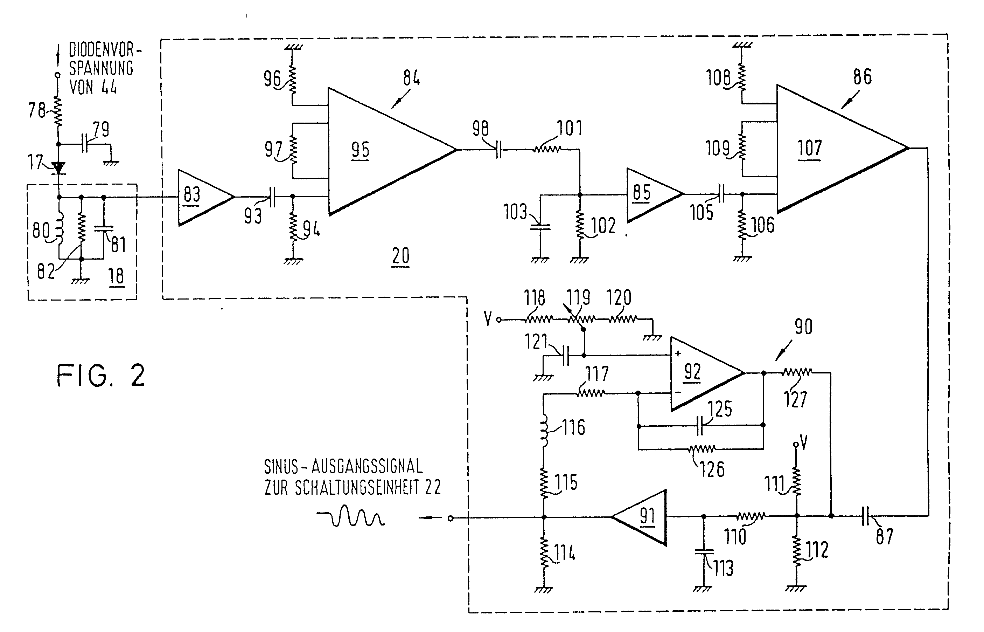

Das bei jedem dieser Schwingungsvorgänge vom Resonanzsystem 18 abgegebene Signal wird durch einen nachgeschalteten Verstärker 20 (siehe Fig. 2) verstärkt und dann einer zur Erzeugung eines zeitsignifikanten Signals dienenden Schaltungsanordnung 22 zugeführt. Hauptaufgabe dieser Schaltungsanordnung 22 ist es, immer dann, wenn von der Photodiode 17 ein Lichtimpuls empfangen worden ist, ein zeitsignifikantes Signal, d.h. ein Signal zu erzeugen, dessen zeitliche Lage in genau definierter Weise mit dem zeitlichen Schwerpunkt des betreffenden Lichtimpulses korreliert ist.

Dieses zeitsignifikante Signal kann beispielsweise eine fallende oder steigende Impulsflanke sein. Aus dem oben Gesagten ergibt sich, dass für jedes Paar von Mess- und Referenzlichtimpulsen, die nacheinander an der Photodiode 17 eintreffen, zwei zeitsignifikante Signale erzeugt werden, die ebenfalls nacheinander auftreten. Das jeweils zuerst auftretende zeitsignifikante Signal wird immer dazu verwendet, die Laufzeitmessung des betreffenden Messlichtimpulses zu starten, während das zweite dazu verwendet wird, diese Laufzeitmessung zu beenden. In dem hier betrachteten Fall, in welchem der Messlichtimpuls von einem Zielgegenstand mit grosser Entfernung reflektiert wird, wird zuerst das dem Referenzlichtimpuls entsprechende zeitsignifikante Signal erzeugt, das somit als Startsignal für die Laufzeitmessung dient. Das dem Messlichtimpuls entsprechende zeitsignifikante Signal wird etwas später erzeugt und dient daher zur Beendigung der Laufzeitmessung.

Zu diesem Zweck werden die beiden zeitsignifikanten Signale über eine Leitung 23 einer Zeitmessvorrichtung zugeführt, die, da sie nicht Gegenstand der vorliegenden Erfindung ist, der Einfachheit halber mit in die zentrale Ablaufsteuerung 10 aufgenommen wurde.

Zweck der hinter der Y-förmigen Verzweigungsstelle 24 angeordneten Lichtleitfaser-Spule 25 ist es, auch den dem Empfangskanal 16 über den kurzen Abschnitt 27 des Referenzlichtweges zugeführten Referenzlichtimpulses in unvermeidlicher Weise miterzeugten Störungen bereits weitgehend abgeklungen sind.

Ist das der Photodiode 17 nachgeschaltete Resonanzsystem 18 durch einen empfangenen Lichtimpuls zu einem gedämpften Schwingungsvorgang angestossen worden, so kann ein erneuter Anstoss, der erfolgt, solange der erste Schwingungsvorgang noch nicht weitgehend wieder abgeklungen ist, zu undefinierten Schwingungsverhältnissen führen, die eine Erzeugung eines dem zweiten Anstoss zeitlich eindeutig zugeordneten zeitsignifikanten Signals durch die Schaltungsanordnung 22 unmöglich machen.

Daher ist vorgesehen, dass die Schaltungsanordnung 22 sofort nachdem sie das ordnungsgemässe Anschwingen des Resonanzsystems 18 erkannt hat, wodurch die Erzeugung eines zeitsignifikanten Signals ausgelöst wird, für einen Mindestzeitraum gesperrt wird, der etwas grösser als die Freiwerdezeit des Empfangskanals 16 ist, d.h. etwas grösser als derjenige Zeitraum, der verstreichen muss, bis das Resonanzsystem 18 nach einem vorausgehenden Anstoss ordnungsgemäss ein zweites Mal angestossen werden kann. Frühestens nach dem Verstreichen dieses Mindestzeitabstandes erhält die Schaltungsanordnung 22 von der Ablaufsteuerung 10 über die Leitung 29 ein Rücksetz- bzw. Vorbereitungssignal, das sie für Schwingungsvorgänge des Resonanzsystems 18 wieder empfänglich macht.

Nun kann es bei sehr kleinen Abständen zwischen der Messvorrichtung und dem Zielgegenstand geschehen, dass der vom Zielgegenstand reflektierte Messlichtimpuls vor dem über die Lichtleitfaser 25, 27 und 28 laufenden Referenzlichtimpuls, gleichzeitig mit dem Referenzlichtimpuls oder innerhalb des oben erwähnten Mindestzeitabstandes nach dem Referenzlichtimpuls an der Empfangsdiode 17 eintrifft. In all diesen Fällen schwingt zwar das Resonanzsystem 18 zunächst einmal an und es wird in Antwort hierauf von der Schaltungsanordnung 22 auch ein erstes und somit die Laufzeitmessung startendes zeitsignifikantes Signal erzeugt. Da in diesen Fällen aber der jeweils später der beiden Lichtimpulse zu einem Zeitpunkt an der Empfangs-Photodiode 17 eintrifft, in welchem die Schaltungsanordnung 22 noch nicht wieder freigegeben ist, wird kein zweites, die begonnene Laufzeitmessung anhaltendes zeitsignifikantes Signal mehr erzeugt. Da für jedes derartige Messgerät eine maximale Messreichweite vorgebbar ist, erreicht die weiterlaufende Laufzeitmessung sehr schnell einen über die Lichtgeschwindigkeit mit dieser maximalen Messreichweite verknüpften Wert, dessen Überschreiten von der Ablaufsteuerung 10 erkannt und zum Anlass für das Abbrechen der betreffenden Laufzeitmessung und für die Auslösung weiterer Steuerbefehle genommen wird.

Einer dieser Steuerbefehle, der über eine Leitung 31 an den optischen Umschalter 38 wiedergegeben wird, veranlasst diesen, statt des kurzen Abschnittes 27 den langen Abschnitt 34 des Referenzlichtweges mit dem zur Photodiode 17 führenden Lichtweg 28 zu verbinden, wodurch der gleichzeitig mit dem Aussenden eines Messlichtimpulses von der Sendediode 3 abgegebene Referenzlichtimpuls um wenigstens das Zweifache der oben genannten Freiwerdezeit T stärker verzögert wird, als beim Durchlaufen des kürzeren Abschnitts 27.

Damit der Referenzlichtimpuls an der Empfangsdiode 17 unabhängig davon, ob er über den kurzen oder den langen Abschnitt des Referenzlichtweges geführt wurde, immer die gleiche Intensität besitzt, ist in den kurzen Abschnitt 27 ein Dämpfungsglied 39 mit einem festen, der durch den langen Abschnitt 34 verursachten Dämpfung entsprechenden Dämpfungswert eingefügt.

Hat nun also, wie dies oben beschrieben wurde, die Ablaufsteuerung 10 bei einer Stellung des Umschalters 38 bei der der über den kurzen Abschnitt 27 des Referenzlichtweges laufende Referenzlichtimpuls zum Empfangskanal 16 gelangt, festgestellt, dass zwar eine Laufzeitmessung gestartet, nicht aber innerhalb eines vernünftigen Zeitraums gestoppt worden ist, so interpretiert sie dies als eine sehr geringe Entfernung zwischen Messvorrichtung und Zielgegenstand und veranlasst in Antwort hierauf den Umschalter 38 in die andere Stellung überzuwechseln, in der der über den langen Abschnitt 34 laufende Referenzlichtimpuls der Photodiode 17 zugeführt wird. Wird hierauf ein neuer Lichtimpuls beispielsweise dadurch ausgelöst, dass der Schaltungsanordnung 4 über die Leitung 8 ein von der Ablaufsteuerung 10 ausgehendes Triggersignal zugeführt wird, so erreicht der an einem nur einen geringen Abstand von der Messvorrichtung aufweisenden Zielgegenstand reflektierte Messlichtimpuls die Empfangsdiode 17 mit Sicherheit so frühzeitig vor dem durch den langen Abschnitt 34 verzögerten Referenzlichtimpuls, dass beide Lichtimpulse durch den Empfangskanal 16 einwandfrei erfasst und zur Erzeugung von zeitsignifikanten Signalen ausgewertet werden können. Es tritt hier zwar eine Umkehr der Reihenfolge ein, d.h. die Laufzeitmessung wird durch den Messlichtimpuls gestartet und durch den Referenzlichtimpuls beendet. Dies hat lediglich zur Folge, dass der gemessene Zeitabstand $\Delta t$ nicht direkt die gesuchte Laufzeit $\Delta T$ des Messlichtim-

pulses wiedergibt, sondern mit dieser über die Gleichung $\Delta T = 2\tau + \delta - \Delta t$ verknüpft ist, wobei $2\tau + \delta$ die durch den langen Referenzlichtweg 25, 34, 27 bedingte, sehr genau ausmessbare Verzögerung bedeutet.

Hierdurch wird es möglich, Entfernungen von 0 cm bis zur maximalen Reichweite des Messgerätes mit einer gleichbleibenden absoluten Genauigkeit von weniger als ±1 cm auszumessen.

Wie Fig. 1 weiterhin zeigt, wird das vom Verstärker 20 abgegebene Signal nicht nur der Schaltungsanordnung 22 zur Erzeugung eines zeitsignifikanten Signals sondern auch einem Komparator 41 zugeführt, der dieses Verstärkersignal mit einer vorgegebenen Referenzspannung vergleicht. Diese Referenzspannung ist so gewählt, dass sie in etwa der oberen Grenze des Linearitätsbereiches des Verstärkers 20 entspricht. Wird nämlich dieser Linearitätsbereich überschritten, so kann es zu erheblichen zeitlichen Verschiebungen der Nulldurchgänge des vom Verstärker 20 abgegebenen Schwingungssignals bezüglich des Anstosszeitpunktes des Resonanzsystems 18 kommen, so dass eine einwandfreie zeitliche Zuordnung dieser Nulldurchgänge bzw. eines von einem solchen Nulldurchgang abgeleiteten zeitsignifikanten Signals zum Empfangszeitpunkt des auslösenden Lichtimpulses nicht mehr gegeben ist.

Bei einem Messgerät, das einerseits zur Erzielung einer möglichst grossen Maximalreichweite mit einer möglichst hohen Sendeleistung und einer hohen Empfindlichkeit auf der Empfängerseite arbeitet, andererseits aber auch in der Lage sein soll, die Entfernung gering beabstandeter, unter Umständen eine hohe Reflektivität besitzender Zielgegenstände exakt auszumessen, kann es insbesondere in den zuletztgenannten Fällen zu einer Übersteuerung des Verstärkers 20 kommen, da die Amplitude des vom Resonanzsystems 18 abgegebenen Schwingungssignals von der Stärke des Anstosses, d.h. also von der Helligkeit des von der Photodiode 17 empfangenen Lichtimpulses abhängt. Tritt eine solche Übersteuerung des Verstärkers 20 ein, so wird dies vom Komparator 41 erkannt, der über die Leitung 42 ein entsprechendes Übersteuerungssignal an die Ablaufsteuerung 10 abgibt. Aufgrund dieses Übersteuerungssignals wird von der Ablaufsteuerung 10 der eben gewonnene Messwert verworfen und die Wiederholung der Messung mit geänderten Geräteparametern eingeleitet, wie dies im folgenden beschrieben wird.

Bei der aus dem Verstärker 20 und der Schaltungsanordnung 22 bestehenden Untereinheit des Empfangskanals 16 lässt sich bei einer angestrebten Messgenauigkeit von weniger als ±1 cm eine Dynamik von ca. 15 erreichen, d.h. zwischen dem kleinsten von der Schaltungsanordnung 22 gerade noch präzise erkenn- und verarbeitbaren Signal und dem grössten, gerade noch innerhalb des Komparator 41 überwachten Linearitätsbereichs des Verstärkers 20 abgegebenen Signal besteht ein Verhältnis von ungefähr 1:15.

Hat nun die Ablaufsteuerung 10 aufgrund eines vom Komparator 41 erzeugten Übersteuerungssignals erkannt, dass der Verstärker 20 über seinen Linearitätsbereich hinaus getrieben wurde, so muss sie bei der Wiederholung des Messversuches dafür sorgen, dass das Resonanzsystem 18 weniger stark angestossen wird. Dies kann durch eine Verringerung der Sendeleistung und/oder durch eine Verringerung der Empfindlichkeit der Messanordnung auf der Empfängerseite erreicht werden. Diese beiden Möglichkeiten sollen im folgenden unter dem Begriff der «Dämpfung des Empfangssignals» zusammengefasst werden.

Es ist nun von besonderer Bedeutung, dass nach einer vom Komparator 41 gemeldeten Übersteuerung des Verstärkers 20 bei der Wiederholung des Messversuches nur eine Dämpfung vorgenommen wird, die kleiner als der oben erwähnte Dynamikbereich 1 : 15 ist. Würde man nämlich gleich beim ersten Dämpfungsschritt beispielsweise um einen Faktor 20 dämpfen, so könnte es geschehen, dass dann, wenn beim ersten, gescheiterten Messversuch nur eine geringe Übersteuerung des Verstärkers 20 vorhanden war, beim nachfolgenden Messversuch kein von der Schaltungsanordnung 22 verarbeitbares Signal mehr erhalten wird.

Durch den Dynamikbereich der aus Verstärker 20 und Schaltungsanordnung 22 bestehenden Untereinheit ist also eine Grunddämpfung vorgegeben, die bei einem einzelnen Dämpfungsschritt nicht überschritten werden darf.

Zeigt sich bei der Wiederholung des Messversuches mit um die Grunddämpfung abgeschwächten Empfangssignal, dass der Verstärker 20 noch immer übersteuert wird, so muss natürlich eine weitere Dämpfungsstufe eingeschaltet und dieses Verfahren solange wiederholt werden, bis der Verstärker 20 wieder in seinem Linearitätsbereich arbeitet. Um die eben beschriebene mehrstufige Dämpfung zu erzielen, stehen bei einer erfindungsgemässen Messanordnung mehrere Parameter zur Verfügung.

Der erste dieser Parameter ist die Leistung der Sendediode 3, die durch eine unterschiedliche hohe Aufladung des in der Schaltungsanordnung 4 zur Lichtimpulserzeugung enthaltenen Energiespeichers verändert werden kann. Das hierzu erforderliche Signal kommt, wie bereits erwähnt, von der Ablaufsteuerung 10 und wird der Schaltungsanordnung 4 bei dem Ausführungsbeispiel nach Fig. 1 über die Leitung 43 zugeführt. Durch die Veränderung der Sendeleistung lässt sich ein Dämpfungsverhältnis etwa in der Grössenordnung 1:4 erzielen.

Als weiterer Parameter steht die Empfindlichkeit der Empfangs-Photodiode 17 zur Verfügung, die durch Änderung der Vorspannung dieser Diode je nach Diodentyp im Verhältnis 1:6 bis 1:7 verändert werden kann. Dies geschieht bei dem Ausführungsbeispiel nach Fig. 1 mit Hilfe der Vorspannungssteuerung 44, die über die Leitung 45 die entsprechenden Befehlssignale von der zentralen Ablaufsteuerung 10 erhält.

Als dritter Parameter zur Verringerung der Empfangs-Empfindlichkeit ist schliesslich ein optisches Dämpfungsglied 46 mit veränderbarem
Dämpfungsfaktor in den Lichtweg 15 zwischen
der Empfangsoptik 14 und der Empfangs-Photodiode 17 eingeschaltet, wobei der Dämpfungsfaktor dieses veränderbaren optischen Dämpfungsgliedes 46 von der Ablaufsteuerung 10 über
die Leitung 47 gesteuert wird.

Als optisches Dämpfungsglied 46 kann beispielsweise eine Irisblende verwendet werden,
die stufenweise verengt bzw. erweitert werden
kann. Vorzugsweise wird hier ein Dämpfungsglied verwendet, mit dem sich beispielsweise ein
Dämpfungsfaktor von 1:160 erzielen lässt.

Dieser Dämpfungsfaktor ist zwar wesentlich
grösser als der Dynamikbereich des Verstärkers
20 und der nachgeschalteten Schaltungsanordnung 22.

Geht man aber davon aus, dass der Komparator 41 bei einem ersten, unter voller Sendeleistung und bei voller Empfindlichkeit der Messanordnung durchgeführten Messversuch eine
Übersteuerung angezeigt hat, so bedeutet dies
lediglich, dass bei der ersten Wiederholung nicht
sofort das Dämpfungsglied 46 eingeschaltet werden darf. Vielmehr ist es zweckmässig zuerst
einen der beiden anderen Dämpfungsparameter
einzusetzen. Kommt es dann bei der mit diesem
Parameter durchgeführten Wiederholung des
Messversuches zu einer erneuten Übersteuerung
des Verstärkers 20, so wird der andere der beiden
nur eine relativ geringe Dämpfung bewirkende
Parameter zusätzlich eingeschaltet. Mit den oben
beispielsweise angeführten Zahlenwerten bedeutet dies, dass bei der zweiten Wiederholung nunmehr mit einer Dämpfung von ungefähr 1:24 bis
1:28 gearbeitet wird. Führt auch das wieder zu
einer Übersteuerung des Verstärkers 20, so können die beiden bisher verwendeten Dämpfungsmöglichkeiten wieder abgeschaltet und statt dessen das optische Dämpfungsglied 46 eingeschaltet werden, da dessen Dämpfungsfaktor von
1:160 mit Sicherheit kleiner als das Produkt aus
dem bisher verwendeten Dämpfungsfaktor 1:24
und der Dynamik 1:15 des Verstärkers 20 und der
nachgeschalteten Schaltungsanordnung 22 ist.

Wird auch bei der allein mit dem Dämpfungsglied 46 durchgeführten Wiederholung des
Messversuches der Verstärker 20 übersteuert, so
können erforderlichenfalls wieder die beiden anderen Dämpfungsparameter eingesetzt werden.
Insgesamt lässt sich auf diese Weise ein Dynamikbereich überstreichen, der grösser als
1:55 000 ist. Durch die zusätzliche Verwendung
eines Filters mit einem Dämpfungsverhältnis beispielsweise ebenfalls von 1:55 000 lässt sich also
ohne weiteres ein Dynamikbereich von $1:3 \cdot 10^9$
erreichen, wodurch es möglich wird, einerseits
eine sehr hohe Senderleistung und eine sehr
hohe Empfindlichkeit für eine möglichst grosse
Reichweite vorzusehen und andererseits auch
noch bei sehr gut reflektierenden Zielgegenständen beliebig kurze Abstände mit einer hohen Genauigkeit auszumessen.

Es hat sich gezeigt, dass eine optimale Messgenauigkeit dann erzielbar ist, wenn die Amplituden bzw. Intensitäten der von der Photodiode 17
empfangenen, jeweils zum Start bzw. Stop ein
und derselben Laufzeitmessung dienenden, d.h.
also zusammengehörenden Mess- und Referenzlichtimpulse einander möglichst gleich sind. Da,
wie eben ausgeführt, die Intensität des Messlichtimpulses gemäss einem Merkmal der Erfindung
innerhalb weiter Grenzen veränderbar ist, ist zur
jeweiligen Anpassung des zugehörigen Referenzlichtimpulses in denjenigen Teil 28 des Referenzlichtweges, der sowohl den unmittelbar als auch
den verzögert zugeführten Referenzlichtimpuls
weiterleitet, ein einstellbares Dämpfungsglied 48
eingefügt, das über die Leitung 49 von der Ablaufsteuerung 10 gesteuert wird.

Bei einer nach dem erfindungsgemässen Verfahren arbeitenden Messvorrichtung ist dem gemäss Fig. 2 über einen Vorwiderstand 78 und
einen Glättungskondensator 79 mit Spannung
versorgten Photoempfänger dieser Messvorrichtung, also z.B. der Photodiode 17 ein Resonanzsystem 18 nachgeschaltet, das vorteilhafterweise
aus einem den Arbeitswiderstand der Photodiode
17 bildenden Parallel-Resonanzschwingkreis besteht, der aus einer Spule 80, der Sperrschichtkapazität der Photodiode 17 und einer zusätzlichen,
parallelgeschalteten, externen Kapazität 81 sowie
einem Widerstand 82 aufgebaut ist.

Dieses Resonanzsystem wird durch einen von
der Photodiode 17 empfangenen Lichtimpuls zu
einem sinusförmigen Schwingungsvorgang angeregt, dessen zweite Halbwelle im allgemeinen
die grösste Amplitude besitzt und der dann nach
einem exponentiellen Dämpfungsgesetz wieder
abklingt.

Es hat sich gezeigt, dass zumindest kurzfristig,
mit Sicherheit also für den äusserst kurzen Zeitraum, innerhalb dessen auch bei grossen auszumessenden Entfernungen Referenzlichtimpulse
und Messlichtimpuls bei der Empfangs-Photodiode 17 eintreffen, die Nulldurchgänge dieses
Schwingungsvorganges in ausserordentlich
exakter, reproduzierbarer Weise mit dem zeitlichen Schwerpunkt des anstossenden Lichtimpulses korreliert sind. Dies gilt auch für die Nulldurchgänge des Ausgangssignals des dem Resonanzsystem 18 nachgeschalteten Verstärkers
20, solange dieser Verstärker nicht übersteuert,
d.h. in seinem Linearitätsbereich betrieben wird.

Somit sind die Nulldurchgänge des Ausgangssignals des Verstärkers 20 ausserordentlich gut
geeignet, um ein zeitsignifikantes Signal auszulösen, mit dessen Hilfe die zur Laufzeitmessung
des Lichtimpulses erforderliche Zeitmessung
entweder gestartet oder beendet wird.

Wie Fig. 2 weiterhin zeigt, besitzt dieser Verstärker 20 als Eingangsstufe einen Impedanzwandler 83, der dazu dient, den relativ hohen
Ausgangswiderstand des Resonanzsystems 18
an den niederen Eingangswiderstand der nachfolgenden ersten Verstärkerstufe 84 anzupassen,
deren Ausgangssignal über einen weiteren Impedanzwandler 85 der zweiten Verstärkerstufe 86
zugeführt wird. Dieser zweistufige Aufbau des Verstärkers 20, bei dem jede der beiden Stufen eine vergleichsweise niedere Verstärkung von etwa 1:10 besitzt, hat den Vorteil, dass er eine wesentlich geringere Schwingneigung zeigt, als ein einstufiger Verstärker mit einer entsprechenden Verstärkung 1:100.

Das Ausgangssignal der zweiten Verstärkerstufe 86 wird über einen galvanisch entkoppelnden Kondensator 87 einer den Gleichspannungs-Nullpegel auf einem fest vorgegebenen Wert konstant haltenden Regelschaltung 90 zugeführt, die in ihrem Vorwärts-Zweig einen dritten Impedanzwandler 91 mit zugehöriger Beschaltung und in ihrem Rückkopplungszweig einen normalen driftarmen Operationsverstärker 92 mit entsprechender Beschaltung umfasst. Der somit gegen temperaturbedingte Schwankungen und aufgrund von Bauelemente-Alterung auftretende Drifterscheinungen stabilisierte Ausgangs-Gleichspannungspegel, dem immer dann, wenn das Schwingungssystem 18 durch einen von der Fotodiode 17 empfangenen Lichtimpuls zu einem Schwingungsvorgang angeregt worden ist, ein verstärktes gedämpftes, sinusförmiges Schwingungssignal überlagert ist, wird dann unmittelbar der Schaltungsanordnung 22 zur Erzeugung eines zeitsignifikanten Signals zugeführt, deren Hauptaufgabe es ist, das ordnungsgemässe Anschwingen des Resonanzsystems 18 festzustellen und daraufhin einen vorgegebenen Nulldurchgang dieser Schwingung zu detektieren und zur Erzeugung eines zeitsignifikanten Signals zu verwenden.

Bei einer bevorzugten Ausführungsform des Verstärkers 20 finden als Impedanzwandler 83, 85 und 91 integrierte Schaltungen Verwendung, wie sie beispielsweise von der Firma National Semiconductor unter der Bezeichnung LH 0033-CG vertrieben werden.

Das Kernstück einer jeden Verstärkerstufe 84 bzw. 86 bildet ein programmierbarer Verstärker, wie er beispielsweise unter der Bezeichnung AM 733-T von der Firma Advanced Micro Devices vertrieben wird. Im Rückkopplungszweig der Regelschaltung 90 kommt ein Operationsverstärker 92 zum Einsatz, der von der Firma Analog Devices unter der Bezeichnung AD 741 LN angeboten wird. Für alle diese integrierten Schaltungen ist in Fig. 2 nur die zur Signalverarbeitung erforderliche externe Beschaltung wiedergegeben, während die den entsprechenden Datenblättern entnehmbare Stromversorgungs-Beschaltung der klareren Darstellung halber weggelassen ist.

Wie man der Fig. 2 entnimmt, wird das Ausgangssignal des Impedanzwandlers 83 über einen Koppelkondensator 93 dem über einen Widerstand 94 mit Masse verbundenen ersten Eingang des programmierbaren Verstärkers 95 der ersten Verstärkerstufe 84 zugeführt. Der zweite Eingang des Verstärkers 95 ist über einen Widerstand 96 zur Masse hin abgeschlossen. Zwischen die Programmiereingänge ist ein die Verstärkung dieser Verstärkerstufe festlegender Programmwiderstand 97 geschaltet.

Das Ausgangssignal der ersten Verstärkerstufe 84 wird über einen Kondensator 98 und einen von den Widerständen 101 und 102 gebildeten Spannungsteiler dem Eingang des zweiten Impedanzwandlers 85 zugeführt, der mit dem Verbindungspunkt der beiden Widerstände 101 und 102 verbunden ist. Zwischen diesem Punkt und der Masse ist ein Siebkondensator 103 zur Ausschaltung von HF-Störungen angeordnet.

Das Ausgangssignal des Impedanzwandlers 85 wird über einen galvanisch trennenden Koppelkondensator 105 dem einen, über einen Widerstand 106 mit Masse verbundenen Eingang des programmierbaren Verstärkers 107 der zweiten Verstärkerstufe 86 zugeführt. Der zweite Eingang dieses programmierbaren Verstärkers 107 ist über einen Widerstand 108 auf Masse gelegt, während die Verstärkung dieser Verstärkungsstufe durch einen Programmierwiderstand 109 vorgegeben wird. Hier zeigt sich ein weiterer Vorteil des zweistufigen Aufbaus des Verstärkers 20, da hierdurch die Möglichkeit geboten wird, über zwei voneinander unabhängige Programmiereingänge die gesamte Verstärkung ausserordentlich genau festzulegen und an die gegebenen Verhältnisse anzupassen.

Das im folgenden nicht mehr weiter veränderte Wechselspannungs-Ausgangssignal der zweiten Verstärkerstufe 86 gelangt über den zur galvanischen Entkopplung dienenden Kondensator 87 und einen Vorwiderstand 110 an den Eingang des dritten Impedanzwandlers 91, dessen Eingangs-Gleichspannung grob durch einen Spannungsteiler festgelegt wird, der von den Widerständen 111 und 112 gebildet ist, die zwischen eine Versorgungsspannungsquelle und die Masse geschaltet sind. Die Beeinflussung der Eingangs-Gleichspannung des Impedanzwandlers 91, die dazu dient, seine Ausgangsgleichspannung konstant zu halten, erfolgt mit Hilfe des Ausgangssignals des Rückkopplungszweiges der Regelschaltung 90, das dem gemeinsamen Verbindungspunkt der Widerstände 110, 111 und 112 und des Kondensators 87 zugeführt wird. Unmittelbar zwischen den Eingang des Impedanzwandlers 91 und die Masse ist noch ein HF-Störungen unterdrückender Kondensator 113 geschaltet.

Der Ausgang des Impedanzwandlers 91 ist einerseits über einen Widerstand 114 mit Masse verbunden. Andererseits wird das an ihm erscheinende Gleichspannungssignal über einen Widerstand 115, eine Wechselspannungs-Anteile unterdrückende Drossel 116 und einen weiteren Widerstand 117 dem invertierenden Eingang des Operationsverstärkers 92 zugeführt, dessen nichtinvertierender Eingang mit Hilfe eines Spannungsteilers, der von den Widerständen 118, 119 und 120 gebildet wird, auf ein Referenzpotential gelegt ist, das durch einen Siebkondensator 121 von HF-Störungen freigehalten wird. Das Ausgangssignal des Operationsverstärkers 92 wird einerseits über einen Rückkopplungszweig, der aus einem Kondensator 125 und einem hierzu parallel geschalteten Widerstand 126 besteht, an den invertierenden Eingang des Operationsverstärkers 92 und andererseits über einen Widerstand 127 auf den oben genannten Verbindungspunkt der Widerstände 110, 111, 112 und des Kondensators 87 geführt.

## Patentansprüche

1. Verfahren zur Steuerung der Dynamik eines Entfernungsmessgerätes, das nach dem Prinzip der Lichtimpuls-Laufzeitmessung arbeitet,
- bei dem einzelne Lichtimpulse von einem Sender (1) erzeugt und in einen Messlichtweg eingespeist werden, der vom Sender (1) über eine Sendeoptik (12) zu einem Zielgegenstand und von diesem zurück über eine Empfangsoptik (14) zu einem Empfangskanal (16) des Messgerätes führt,
- bei dem durch das elektrische Ausgangssignal, das ein das Eingangsglied des Empfangskanals (16) bildender elektro-optischer Empfänger (17) beim Empfang eines Lichtimpulses abgibt, ein dem Empfänger nachgeschaltetes Resonanzsystem (18) zu einem gedämpften Schwingungsvorgang angestossen wird,
- bei dem das während des Schwingungsvorganges vom Resonanzsystem (18) abgegebene elektrische Schwingungssignal nach Verstärkung durch einen Verstärker (20) zur Erzeugung eines zeitsignifikanten Signals verwendet wird, das mit einem vorbestimmten Nulldurchgang des Verstärker-Ausgangssignals exakt zeitlich korreliert ist und zum Starten oder Beenden einer Lichtimpuls-Laufzeitmessung dient,
- bei dem die Amplitude des Verstärker-Ausgangssignals durch einen Komparator (41) mit einer Referenzspannung verglichen wird, die die obere Grenze des Linearitätsbereiches des Empfangskanals (16) kennzeichnet,
- bei dem wenigstens ein Geräteparameter zwischen verschiedenen Werten umgeschaltet wird, um die Amplitude des Verstärker-Ausgangssignals schrittweise zu verändern, und
- bei dem immer dann, wenn die Amplitude des Verstärker-Ausgangssignals die Referenzspannung übersteigt, der betreffende Lichtimpuls nicht zur Bildung eines Messwertes verwendet sondern die Messung unter Aussendung eines neuen Lichtimpulses wiederholt wird, nachdem der wenigstens eine Parameter auf einen anderen Wert umgeschaltet worden ist, der zu einer kleineren Amplitude des Verstärker-Ausgangssignals führt,
dadurch gekennzeichnet, dass ein Verstärker (20) mit fest vorgegebenem Verstärkungsfaktor verwendet wird, dass als Geräteparameter die Helligkeit der am elektro-optischen Empfänger (17) eintreffenden Messlichtimpulse und/oder die Empfindlichkeit des elektro-optischen Empfängers (17) ausgewählt werden, um die Amplitude des dem Verstärker (20) zugeführten Schwingungssignals zu verändern, dass zur Erzielung eines Messwertes ein erster Messversuch unternommen wird, bei dem die Geräteparameter auf Werte geschaltet werden, die eine maximale Amplitude des dem Verstärker zugeführten Schwingungssignals ermöglichen, dass dann, wenn bei diesem ersten Messversuch der Verstärker übersteuert wird, bei einem zweiten Messversuch einer der Geräteparameter auf einen anderen Wert umgeschaltet wird, um die Amplitude des dem Verstärker zugeführten Signals um einen Grunddämpfungswert zu verringern, der etwas kleiner als der Dynamikbereich des Verstärkers ist, und dass bei erneuter Übersteuerung des Verstärkers die Geräteparameter so auf andere Werte umgeschaltet werden, dass die schrittweise weitere Verringerung der Amplitude des dem Verstärker zugeführten Schwingungssignals von Schritt zu Schritt höchstens mit jeweils der nächst grösseren ganzzahligen Potenz des Grunddämpfungswertes erfolgt.

2. Vorrichtung zur Steuerung der Dynamik eines Entfernungsmessgerätes, das nach dem Prinzip der Lichtimpuls-Laufzeitmessung arbeitet und folgende Bestandteile umfasst:
- einen Sender (1), der einzelne Lichtimpulse erzeugt und in einen Messlichtweg einspeist, der vom Sender (1) über eine Sendeoptik (12) zu einem Zielgegenstand und von diesem zurück über eine Empfangsoptik (14) zu einem Empfangskanal (16) des Messgerätes führt,
- einen das Eingangsglied des Empfangskanals (16) bildenden elektro-optischen nachgeschaltetem Resonanzsystem (18), das durch das vom elektro-optischen Empfänger (17) beim Empfang eines Lichtimpulses abgegebene Ausgangssignal jeweils zu einer gedämpften Schwingung angestossen wird,
- einen Verstärker (20), der das vom Resonanzsystem (18) während des Schwingungsvorganges abgegebene Schwingungssignal verstärkt und dessen Ausgangssignal einer Schaltungsanordnung (22) zugeführt wird, die ein zeitsignifikantes Signal erzeugt, das mit einem vorbestimmten Nulldurchgang des Verstärker-Ausgangssignals zeitlich korreliert ist und zum Starten oder Beenden einer Lichtimpuls-Laufzeitmessung dient,
- einen Komparator (41), der die Amplitude des Verstärker-Ausgangssignals mit einer Referenzspannung vergleicht, die die obere Grenze des Linearitätsbereiches des Empfangskanals (16) kennzeichnet,
- wenigstens eine Umschalteinrichtung (4, 44, 47) zum Umschalten wenigstens eines Geräteparameters zwischen verschiedenen Werten, um die Amplitude des Verstärker-Ausgangssignals schrittweise zu verändern, und
- eine Ablaufsteuerung (10), die immer dann, wenn die Amplitude des Verstärker-Ausgangssignals die Referenzspannung übersteigt, den betreffenden Lichtimpuls nicht zur Bildung eines Messwertes verwendet sondern die Messung unter Aussendung eines neuen Lichtimpulses wiederholt, nachdem der wenigstens eine Parameter auf einen anderen Wert umgeschaltet worden ist, der zu einer kleineren Amplitude des Verstärker-Ausgangssignals führt, dadurch gekennzeichnet,
- dass der Verstärker (20) einen fest vorgegebenen Verstärkungsfaktor besitzt und

– dass durch die Umschalteinrichtung (4, 44, 47) wenigstens eine der folgenden Einheiten des Entfernungsmessgerätes zum Umschalten des jeweiligen Geräteparameters angesteuert wird:
eine im Sender (1) enthaltene Einheit (4) zur Umschaltung der Sendeleistung,
eine im Messlichtweg angeordnete optische Dämpfungsvorrichtung (46) mit veränderbarem Dämpfungsfaktor, und eine dem Empfänger (17) zugeordnete Einheit (44) zur Änderung der Empfindlichkeit des Empfängers durch Umschaltung seiner Vorspannung.

3. Vorrichtung nach Anspruch 2, dadurch gekennzeichnet, dass die optische Dämpfungsvorrichtung (46) im Messlichtweg zwischen der Empfangsoptik (14) und dem elektro-optischen Empfänger (17) angeordnet ist.

FIG. 1

EP 0 165 403 B1

FIG. 2

DIODENVOR-
SPANNUNG
VON 44

SINUS – AUSGANGSSIGNAL
ZUR SCHALTUNGSEINHEIT 22